Europäisches Patentamt

European Patent Office

Office européen des brevets

(19)

(11) Publication number : **0 446 968 B1**

(12) **EUROPEAN PATENT SPECIFICATION**

(45) Date of publication of patent specification :
05.07.95 Bulletin 95/27

(51) Int. Cl.⁶ : **H04N 7/24**

(21) Application number : **91108921.7**

(22) Date of filing : **06.09.84**

(54) **Vector quantizer.**

(30) Priority : 06.09.83 JP 163617/83
09.01.84 JP 1669/84
18.01.84 JP 6473/84
30.01.84 JP 14606/84
30.01.84 JP 14607/84
02.02.84 JP 17281/84
23.02.84 JP 32918/84
15.03.84 JP 49901/84

(43) Date of publication of application :
18.09.91 Bulletin 91/38

(60) Publication number of the earlier application in
accordance with Art. 76 EPC : **0 137 314**

(45) Publication of the grant of the patent :
05.07.95 Bulletin 95/27

(84) Designated Contracting States :
**DE FR GB NL**

(56) References cited :
EP-A- 0 097 858
GB-A- 2 050 752
IEEE PROCEEDINGS OF THE INTER-
NATIONAL CONFERENCE ON ACOUSTICS ,
SPEECH ANDSIGNAL PROCESSING vol. 1, 3
May 1982, PISCATAWAY pages 428 - 431 A.
GERSHO ETAL. 'Image Coding Using Vector
Quantization.'

(73) Proprietor : **MITSUBISHI DENKI KABUSHIKI
KAISHA
2-3, Marunouchi 2-chome
Chiyoda-ku
Tokyo 100 (JP)**

(72) Inventor : **Murakami, Tokumichi, c/o
MITSUBISHI DENKI K.K.
Information Systems,
and Electronics Devel. Lab.
325, Kamimachiya, Kamakura-shi, Kanagawa
(JP)**
Inventor : **Asai, Kohtaro, c/o MITSUBISHI
DENKI K.K.
Information Systems,
and Electronics Devel. Lab.
325, Kamimachiya, Kamakura-shi, Kanagawa
(JP)**
Inventor : **Ito, Atsushi, c/o MITSUBISHI DENKI
K.K.
Information Systems,
and Electronics Devel. Lab.
325, Kamimachiya, Kamakura-shi, Kanagawa
(JP)**

(74) Representative : **Eisenführ, Speiser & Partner
Martinistrasse 24
D-28195 Bremen (DE)**

EP 0 446 968 B1

## Description

BACKGROUND OF THE INVENTION

Field of the Invention

The present invention relates to a vector quantizer for quantizing the vector of image information and audio information.

Description of the Prior Art

The prior art relating to such a vector quantizer is described in literatures such as: Y. Linde, A. Buzo and R.M. Gray, "An Algorithm for Vector Quantizer", IEEE Trans., Com-28, pp. 84 - 95 (1980); A. Gersho, "On the Structure of Vector Quantizers", IEEE Trans., IT-82, pp. 157 - 166 (1982); A. Buzo and A.H. Gray, Jr, "Speech Coding Based Upon Vector Quantization", IEEE Trans., ASSP-28 (1980); B.H. Juang and A.H. Gray, Jr., "Multiple Stage Quantization for Speech Coding", Proc. Intl. Conf. on A.S.S.P., pp. 597 - 600, Paris (1982); and A. Gersho and V. Cuperman, "Vector Quantization: A Pattern Matching Technique for Speech Coding", IEEE, COMMUNICATION MAGAZINE, pp. 15 - 21, Dec. (1983).

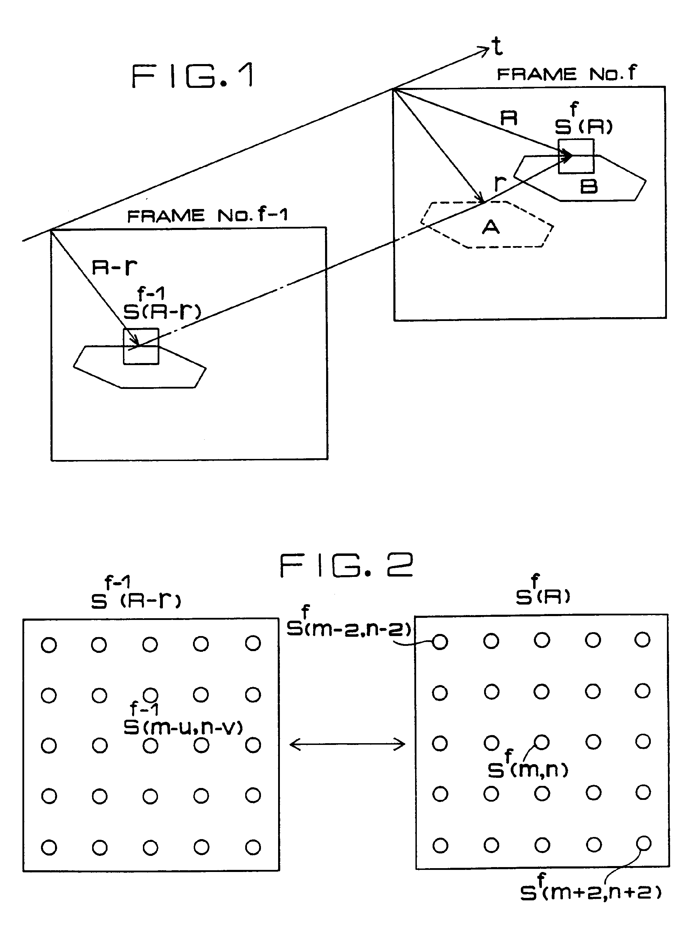

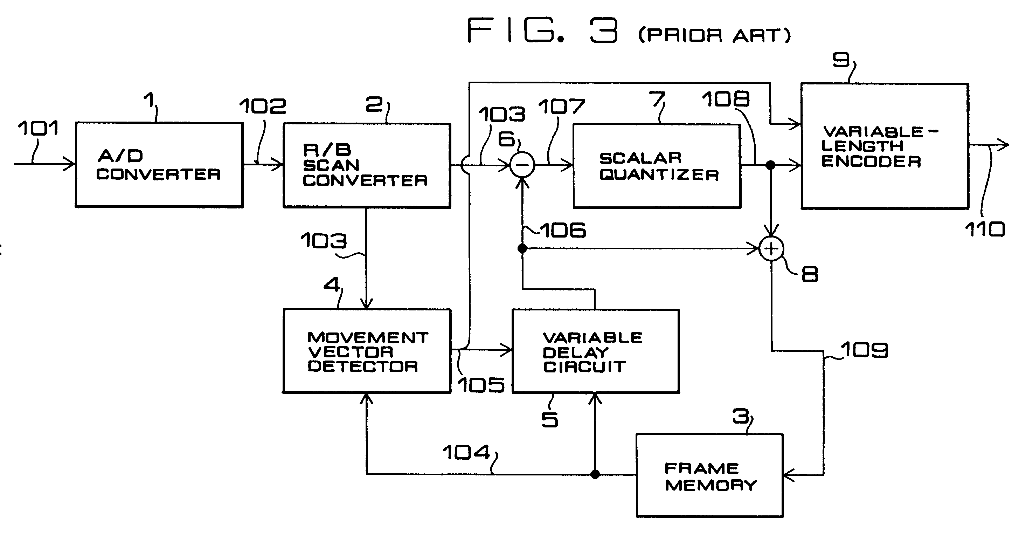

A vector quantizer as shown in Fig. 3, which will be described later, is known in addition to those vector quantizers of the prior art. The principle of the vector quantizer will be described prior to the description of the vector quantizer of Fig. 3. Referring to Fig. 1, assuming that an object has moved on the screen during the period from a frame No. f-1 to a frame No. f from a position A to a position B, then a block $S^f(R)$ including a plurality of the lattice samples of an image signal around a position vector R in the frame No. f becomes approximately equal to the block $S^{f-1}(R-r)$ of the image signal at a position determined by subtracting a movement vector r from a position vector R in the frame No. f-1. As shown in Fig. 2, when the position vector R = (m, n) and the movement vector r = (u, v), $S^f(R) \doteqdot S^{f-1}(R-r)$. Suppose the image signal at R = (m, n) is S(M, n) and $S^f(R) = [S(m-2, n-2), ..., S(m, n), ..., S(m+2, n+2)]$, the degree of analogy L(n, v) between $S^f(R)$ and $S^{f-1}(R-r)$ is defined as the block unit matching scale of 5x5 picture element as follows;

$$L(u, v) = \sum_g \sum_h |S^f(m+g, n+h) - S^{f-1}(m+g-u, n+h-v)|$$

In this state, the movement vector r is expressed by

$$r = [u, v | \min_{u,v} L(u, v)]$$

That is, the degree of analogy L(u, v) of $S^f(R)$ and $S^{f-1}(R-r)$ is expected to be minimized by block matching. Therefore, in introducing movement compensation into inter-frame prediction coding, the use of a block which minimizes L(u, v), extracted from image signal blocks of the frame No. f-1, as a prediction signal in giving the block $S^f(R)$ of the image signal of the position of R in the frame No. f to an inter-frame prediction encoder, the power of prediction error signal will be reduced to the least and encoding efficiency is improved.

Referring to Fig. 3 showing an example of the constitution of a conventional vector quantizer of this kind, there are shown an A/D converter 1, a raster/block scan converter 2, a frame memory 3, a movement vector detector 4, a variable delay circuit 5, a subtractor 6, a scalar quantizer 7, an adder 8 and a variable-length encoder 9.

The manner of operation of this vector quantizer will be described hereinafter. First the A/D converter 1 converts an analog picture input signal 101 into the corresponding digital signal and gives a digital picture signal sequence 102 according to the sequence of raster scanning. The output procedure of the raster scan digital picture signal sequence 102 on the time series of the picture signal is converted into block scaning by the raster/block scan converter 2, and thereby the digital picture signal sequence is converted into a block scan picture input signal 103 arranged sequentially in lattice block units (the interior of the block is raster scanning) from the top to the bottom and from the left to the right on the screen. A regenerative picture signal 104 of one frame before regenerated according to interframe DPCM loop is read from the frame memory 3. The movement vector detector 4 executes the block matching of the present block scan picture input signal 103, the regenerative picture signal 104 of one frame before and the picture signal and gives the movement vector r = (u, v) of the picture signal 104 of one frame before which minimizes the degree of analogy. The movement vectors (u, v) corresponds to the horizontal and the vertical shifts of the picture element of the block of the regenerative picture signal 104 of one frame before. On the basis of the movement vector 104, the variable delay circuit 5 block-shifts the one-frame preceding regenerative picture signal 104 by the movement vector and gives a predictive picture signal 106 which is the closest to the present block scan picture input signal 103. The subtractor 6 calculates the differential between the block scan picture input signal 103 and the predictive picture signal 106 and gives a predictive error picture signal 107 to the scalar quantizer 7. The scalar quantizer 7 converts the predictive error picture signal 106 into a predictive error quantization picture signal 108 reduced in quantization level at picture element unit. The adder 8 adds the predictive error quantization picture signal 108 and the predictive picture signal 106 and gives a regenerative picture signal 109 including scalar quantization error to the frame memory 3. The frame memory performs delaying operation to delay the present regenerative picture signal 109 by one frame. In the movement compensation inter-frame DPCM loop, supposing that the picture input signal 103 is $s^f(m, n)$, the predictive picture signal 106 is $p^f(m, n)$, the predictive error signal 107 is $\varepsilon^f(m, n)$, scalar quantization noise is $Q^f_s(m, n)$, the predictive error quantization signal 108 is $\hat{S}^f(m, n)$ and the one-frame preceding regenerative picture signal 104 is $\hat{S}^{f-1}(m, n)$, then

$$\varepsilon^f(m, n) = S^f(m, n) - P^f(m, n),$$
$$\hat{\varepsilon}^f(m, n) = \varepsilon^f(m, n) + Q^f_s(m, n),$$
$$\hat{S}^f(m, n) = P^f(m, n) + \hat{\varepsilon}^f(m, n) = S^f(m, n)$$
$$+ Q^f_s(m, n),$$

and

$$\hat{S}^{f-1}(m, n) = \hat{S}^f(m, n) \cdot Z^{-f}.$$

where $Z^{-f}$ denotes delay corresponding to one frame.

$P^f(m, n)$ is expressed through movement compensation on the basis of $\hat{S}^{f-1}(m, n)$ by the following formula:

$$P^f(m, n) = \hat{S}^{f-1}(m - u, n - v).$$

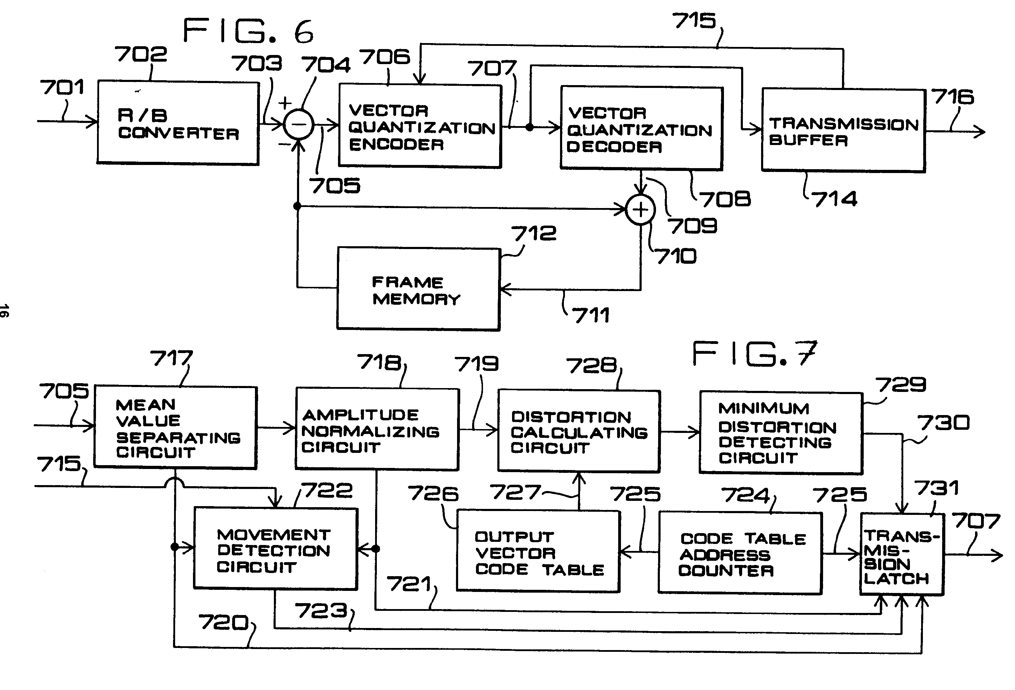

Fig. 5 shows an example of the constitution of the movement vector detector 4 for carrying out movement compensation.

Referring to Fig. 5, there are shown an analogy degree computation circuit 10, a movement region line memory 11, a line memory control circuit 12, an analogy degree comparator 13 and a movement vector latch 14.

The movement vector detector 4 gives $S^f(R)$ produced by blocking a plurality of the sequences of the present picture input signal 103 to the analogy degree computation circuit 10. At this moment, the lines of the one-frame preceding regenerative picture signal 104 stored in the frame memory 3 corresponding to the tracking range of the movement region of $S^f(R)$ are stored in the movement region line memory 11. The line memory control circuit 12 sends sequentially the blocks adjacent to a plurality of blocks $S^{f-1}(R+r)$ of the one-frame preceding regenerative image signal 104 to the analogy degree computation circuit 10. The analogy degree computation circuit 10 computes the analogy degree $L(u, v)$ of the blocks in the neighborhood of $S^f(R)$ and $S^{f-1}(R-r)$ and the analogy degree comparator 13 determines the minimum analogy degree

$$\min_{u, v} L(u, v).$$

Since u and v corresponds to the horizontal and the vertical address shifts of blocks in the movement region line memory 11 respectively, the analogy degree comparator 13 gives a movement detection strobing signal 111 to the movement vector latch 14 when the analogy degree is minimized, to take in a movement vector address 112. The movement vector latch 14 sends the displacement r of $S^{f-1}(R-r)$ relative to $S^f(R)$ minimizing the analogy degree $L(u, v)$ as a movement vector 105 to the variable delay circuit 5 and the variable-length encoder 9 of Fig. 3.

The variable-length encoder 9 of Fig. 3 processes the movement vector 105 and the predictive error quantization signal 108 through variable-length encoding to reduce the amount of information of the picture signal. The variable-length encoding enables the transmission of the movement compensation inter-frame encoding output 110 at a low bit rate.

Since the conventional movement compensation inter-frame encoder is constituted as described hereinbefore, the movement compensation operation is performed for every block and the inter-frame DPCM operation is performed for every picture element. Accordingly, the identification between the minute variation of the screen and noise is impossible and the variable-length encoding of the movement vector and the predictive error quantization signal is difficult. Furthermore, since the control of the variation of the quantity of produced information resulting from the variation of the movement scalar is difficult, a large loss is inevitable when transmission is carried out through a transmission channel of a fixed transmission capacity. Still further, encoding the predictive error quantization signal for every picture element is inefficient. Since the movement compensation system is liable to be affected by transmission channel error, the frame memory needs to be reset or repeated transmission when transmission channel error occurs, which requires long resetting time.

## SUMMARY OF THE INVENTION

Object of the present invention is to provide a sequential approximation vector quantizer employing tree search vector quantization in the vector quantization segment and capable of preventing unnatural regenerated picture when the picture changes suddenly even if the feedback control of the amount of data is performed, through sequential approximation at each stage, namely, through the variable control of the number of stages.

## BRIEF DESCRIPTION OF THE DRAWINGS

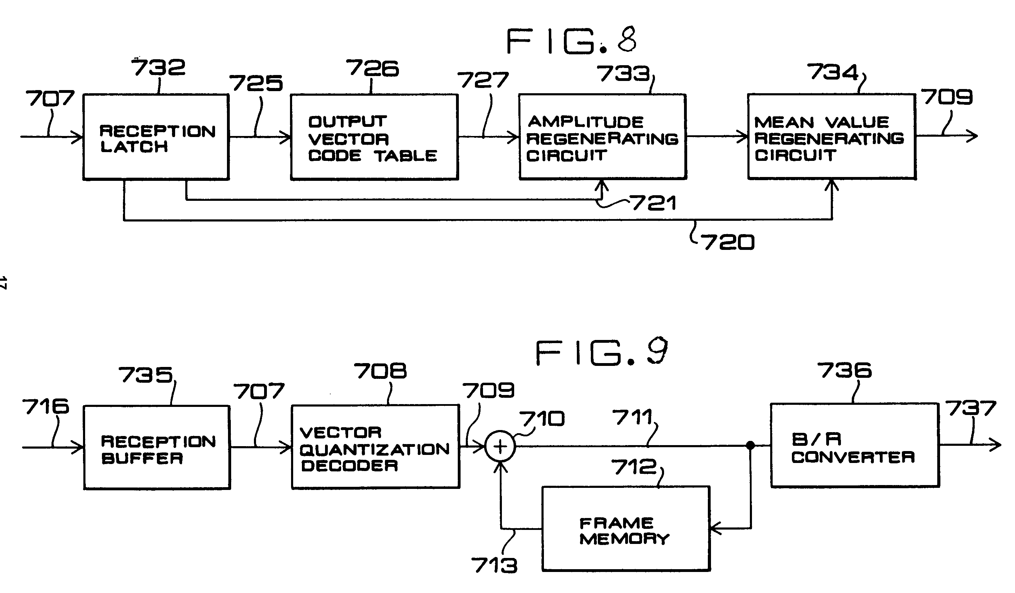

Figure 1 is an explanatory pictorial view for facilitating the understanding of the definition of the movement of picture signals between frames by a movement vector;
Figure 2 is an explanatory view showing the relation between the movement vector and the arrangement of the picture elements of a moved block;
Figure 3 is a block diagram showing a conventional movement compensation inter-frame encoder;

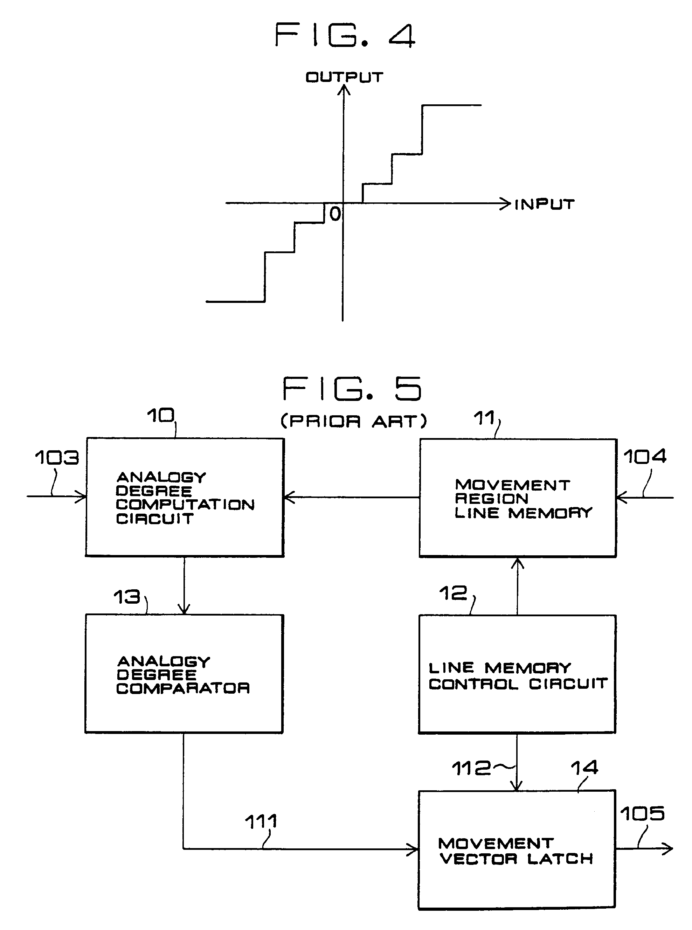

Figure 4 is a graph showing the input-output characteristics of the scalar quantizer employed in the encoder of Fig. 3;
Figure 5 is a block diagram of the movement vector detector employed in the encoder of Fig. 3;
Figure 6 is a block diagram showing the constitution of the encoder of an inter-frame vector quantizer;
Figure 7 is a block diagram showing the constitution of the vector quantization encoder of Fig.6 ;
Figure 8 is a block diagram showing the constitution of the vector quantization decoder of Fig.6 ;
Figure 9 is a block diagram showing the constitution of the decoder of an inter-frame vector quantizer;
Figure 10 is an explanatory representation for the explanation of a picture signal blocking process;
Figure 11 is an explanatory representation of a tree search vector quantization;
Figure 12 is a block diagram showing the constitution of the encoder of a serial approximation vector quantizer embodying the present invention;
Figure 13 is a block diagram showing the constitution of the TSVQ encoder of Fig. 12;
Figure 14 is a block diagram showing the constitution of the second-stage TSVQ encoder of Fig. 13 ;
Figure 15 is a block diagram showing the constitution of the TSVQ decoder of Fig. 13;
Figure 16 is a block diagram showing the constitution of the decoder of a serial vector quantizer.
An embodiment of the present invention will be described hereinafter.
This embodiment is an inter-frame vector quantizer capable of performing highly efficient coding of picture signals by the use of the correlation between picture signals in consecutive scenes.
Prior to the concrete description of this embodiment, the fundamental constitution of the inter-frame vector quantizer will be explained. Fig.6 is a block diagram showing the constitution of an encoder. In Fig.6 , indicated at 701 is a digitized picture signal sequence, at 702 is a raster/block scan converter for blocking every plurality of picture signal sequences 701 arranged along the direction of raster scanning, at 703 is blocked picture signal sequence, at 704 is a subtracter, at 705 is the predictive error signal sequence of the blocked picture signal, at 706 is a movement detection vector quantized encoder, at 707 is a vector quantization coded output, at 708 is a vector quantization decoder, at 709 is a vector quantization decoded output, i.e., a regenerative predictive error signal sequence, at 710 is an adder, at 711 is a block of regenerated picture signal sequences, at 712 is a frame memory, at 713 is a block of regenerative picture signal sequences delayed by a one-frame cycle and also is a block of predictive signal sequences for predicting the block 730 of picture signal sequences, at 714 is a transmission buffer, at 715 is a feedback control signal and at 716 is the output of the encoder. Fig.9 shows the details of an exemplary constitution of the vector quantization encoder 706. In Fig.7 , indicated at 717 is a mean value separating circuit, at 718 is an amplitude normalizing circuit, at 719 is the inter-frame difference of the block of picture signal sequences normalized with respect to amplitude after separating the mean value, at 720 is a mean value calculated by the mean value separating circuit 717, at 721 is the amplitude calculated by the amplitude normalizing circuit 718, at 722 is a movement detection circuit for deciding, on the basis of the mean value 720 and the amplitude 721, whether or not the blocked picture signal sequences which are presently being processed have made any significant movement with respect to the block of picture signal sequences located at the same position in the one-frame cycle preceding frame, at 723 is the dicision signal given by the movement detection circuit 722, at 724 is a code table address counter, at 725 is a code table index, at 726 is an output vector code table memory, at 727 is a code table output vector, at 728 is a distortion calculating circuit, at 729 is a minimum distortion detecting circuit, at 730 is a signal indicating the minimum distortion and at 731 is a transmission latch.

Fig.8 shows the details of the constitution of the vector quantization decoder 708. In Fig.8 , indicated at 732 is a reception latch, at 733 is an amplitude regenerating circuit and at 734 is a mean value regenerating circuit.

Fig.9 shows an exemplary constitution of the decoder. In Fig.9 , indicated at 735 is a reception buffer, at 736 is a block/raster scan converter which acts reversely to the raster/block scan converter 702 and at 737 is a regenerated picture signal sequences.

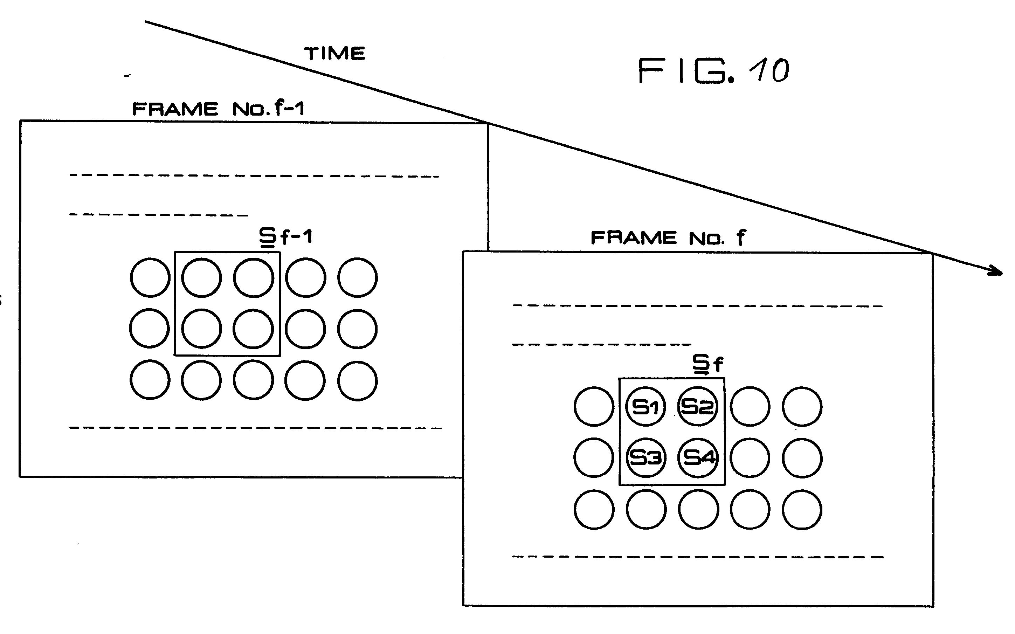

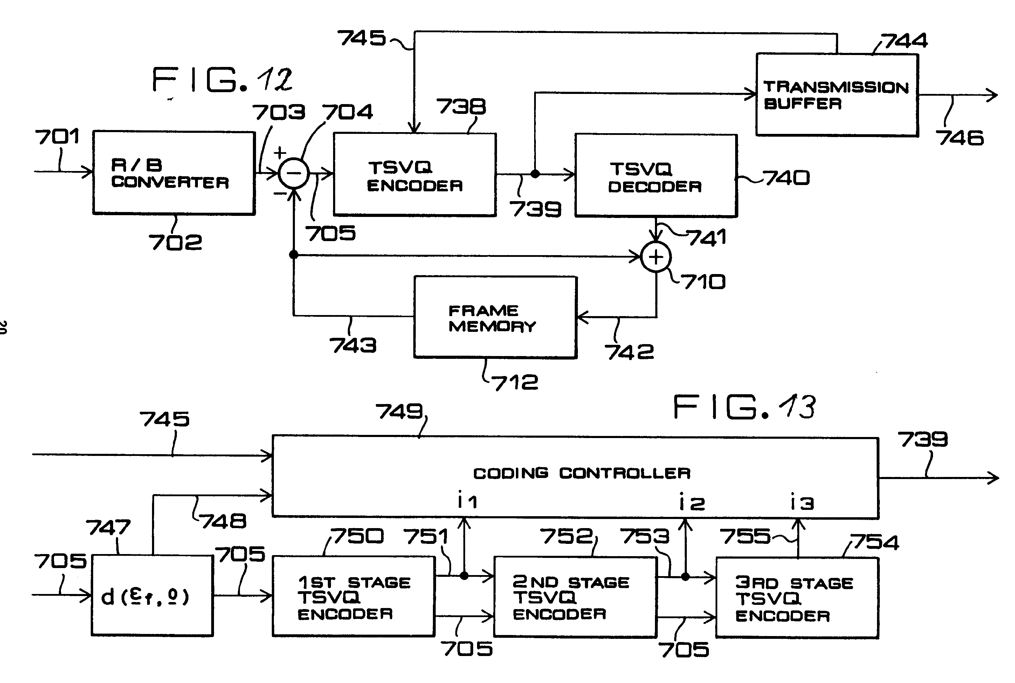

The actions of the components will be described hereinafter. First the general actions of the encoder will be described in connection with Fig.6 . Basically, this encoder is based on the conception of the inter-frame DPCM system. On a scene, the digitized picture signal sequences 701 are regarded as square lattice samples, however, the input is given in an order along the raster scanning direction. The raster/block scan converter 702 partitions the picture signal sequences 701 in blocks as shown in Fig.10 and provides these blocks as output signal. Suppose the blocked picture signal sequences 703 is a frame No. f is expressed by a signal source vector $\underline{S}_f = \{S_1, S_2, ..., S_k\}_f$. In Fig. 12, k = 5. Further, suppose the differences 705 between the signal source vectors 703 and the blocks 713 of the predictive signal sequences calculated by the subtractor 704 is $\underline{\varepsilon}_f$, the blocks 709 of the regenerative differential signal sequences formed by the vector quantization encoder 706 and the vector quantization decoder 708 is $\hat{\underline{\varepsilon}}_f$ and the predictive signal sequences 713 given by the frame memory 712 is $\underline{P}_f$. Then, the general actions of the encoder shown in Fig.8 are expressed by

$$\left. \begin{array}{l} \underline{\varepsilon}_f = \underline{S}_f - \underline{P}_f \\ \hat{\underline{\varepsilon}}_f = \underline{\varepsilon}_f + \underline{Q} \\ \hat{\underline{S}}_f = \underline{P}_f + \hat{\underline{\varepsilon}}_f = \underline{S}_f + \underline{Q} \\ \underline{P}_f = \underline{S}_f \cdot Z^{-f} \end{array} \right\} \qquad \ldots\ldots\ldots \quad (1)$$

where $\underline{Q}$ is a vector quantization error and $Z^{-f}$ is a delay of one-frame cycle caused by the frame memory 712. Accordingly, $\underline{P}_f$ is equal to the regenerative signal sequence $\hat{\underline{S}}_{f-1}$ of the block $\underline{S}_{f-1}$ of picture signal sequences one-frame cycle before the signal source vector 703, namely, the picture signal sequence at the same position in the frame No. f-1. The vector quantization coded output 707 obtained through the above-mentioned process is the difference between the signal source vector 703 and the block 713 of the predictive signal sequences namely, a result of data-compression of the block $\underline{\varepsilon}_f$ 705 of the predictive error signals by the vector quantization encoder 706 and the output 707 is given to the transmission buffer 714, and then given to the transmission line as the encoder output 716. The actions of the vector quantization encoder 706 and the vector quantization decoder 708 will be described in connection with Figs.7 and 8. In vector quantization, a block composed of k pieces of samples (k is the plural number) is regarded as an input vector in k-dimensional signal space, output vectors which have minimum distortion with respect to input vectors which are given sequentially are selected from a set of output vectors prepared previously on the basis of the probability distribution of input vectors so that the distortion with respect to the input vector is generally minimized, and the indices attached to the selected output vectors are quantized and given as outputs. In the decoding section, output vectors corresponding to the indices are read from the same set of output vectors prepared also in the decoding section. The input vector given is the block $\underline{\varepsilon}_f = \{\varepsilon_1, \varepsilon_2, ..., \varepsilon_k\}_f$ 705 of the predictive error signals. The mean value separating circuit 717 substracts the mean value $\mu$ 720 operated by the use of a formula

$$\mu = K^{-1} \sum_{j=1}^{k} \varepsilon_j \qquad \ldots\ldots\ldots \quad (2)$$

from the block $\underline{\varepsilon}_f$ 705, the amplitude normalizing circuit 718 normalizes the output of the mean value separating circuit 717 by the amplitude $\sigma$ 721 calculated by the use of a formula

$$\sigma = K^{-1} \sum_{j=1}^{k} |\varepsilon_j - \mu| \qquad \dots \dots \quad (3)$$

to form a mean value separation normalized input vector $\underline{X} = \{(X_1, X_2, ..., X_k)\}$ 719. That is,

$$X_j = (\varepsilon_j - \mu)/\sigma \qquad (j = 1, 2, ..., k) \quad (4)$$

The amplitude may be calculated by formulas other than formula (3), such as, for example,

$$\sigma = \left[ K^{-1} \sum_{j=1}^{k} |\varepsilon_j - \mu|^2 \right]^{\frac{1}{2}} \qquad \dots \dots \quad (5)$$

$$\sigma = \max_{j} |\varepsilon_j - \mu|$$

Through the mean value separation normalizing process, the input vectors can be distributed at random within a limited range in k-dimensional signal space, and thereby the efficiency of vector quantization is improved. In implementing the mean value separation normalizing process, the set of output vectors needs to be prepared on the basis of the distribution of the input vectors processed through the mean value separation normalizing process and, after the output vectors have been read in the decoding section, processes reverse to the mean value separation normalizing process, such as amplitude regeneration and mean value regeneration, need to be implemented. Naturally, vector quantization may be such a vector quantization omitting those reverse processes. Mean value separation normalized output vectors prepared on the basis of the probability distribution density of the mean value separation normalized input vector so that the distortion from the mean value separation normalized input vectors is generally minimized are written previously in the output vector code table memory 726. When a mean value separation normalized input vector $\underline{X}$ 719 is given, the code table address counter 724 sequentially dives indices of vectors stored in the output vector code table memory 726, i.e., code table addresses 725, to read the mean value separation normalized output vectors $\underline{y}_\tau = \{y_{\tau 1}, y_{\tau 2}, ..., y_{\tau k}\}$ ($\tau$ = index) 727 from the output vector code table memory 726. The distortion calculating circuit 728 calculates the difference between the mean value separation normalized input vector $\underline{S}$ 719 and the mean value separation normalized output vector $\underline{y}_\tau$ 727. Several distortion calculating methods are available, for example, such as those shown below.

$$d(\underline{X}, \underline{y}_\tau) = \sum_{j=1}^{k} |X_j - y_{\tau j}|$$

$$d(\underline{X}, \underline{y}_\tau) = \sum_{j=1}^{k} |X_j - y_{\tau j}|^2 \qquad \dots \dots \quad (6)$$

$$d(\underline{X}, y_\tau) = \max |X_j - y_{\tau j}|$$

where $d(\underline{X}, y_\tau)$ is distortion. The minimum distortion detecting circuit 729 gives a strobing signal 730 when a distortion $d(\underline{X}, y_\tau)$ which is smaller than the past minimum distortion is found. At the same time, the latch 731 stores the index 725. At a stage where the code table address counter has given all of a series of indices, the index i of a mean value separation normalized output vector which minimizes distortion from the mean value separation normalized input vector is stored in the latch 731. The index, the mean value $\mu$ 720 and the amplitude $\sigma$ 721 form the vector quantization coded output. The data is compressed further by the use of the correlation between successive scenes. Since the input vectors are blocked predictive error signals, the input vectors are distributed around a zero vector. The amount of data can be reduced considerably by setting a threshold to regard input vectors distributed near the zero vector as zero vectors and providing neither index, mean value nor amplitude. The movement detecting circuit 722 receives the mean value $\mu$ 720 and the amplitude $\sigma$ 721

and decides whether or not the block of the predictive error signal sequences can be regarded as a zero vector, namely, the present block has made any significant variation (movement) with respect to the corresponding block in the one-frame cycle preceding frame. This decision is made by examining the mean value and the amplitude with respect to a threshold $T_\theta$ as

when $\mu \leqq T_\theta$ and $\sigma \leqq T_\theta$, significant movement has not been made and

when $\mu > T$ or $\sigma > T_\theta$, significant movement has been made.

Accordingly, the latch 731 gives only a signal indicating "no movement" when a code indicating "no movement" is given as the result 723 of movement detection and gives the index 725, the mean value 720 and the amplitude 721 in addition to a signal indicating "movement" as a vector quantization coded output signal 707. The transmission buffer 714 keeps monitoring the amount of information transmitted and gives a feedback control signal 715 to control the threshold $T_\theta$. Thus the amount of information transmitted is controlled. In the vector quantization decoder 708, the latch 732 receives the vector quantization coded output 707. Upon the reception of a signal indicating "movement", the latch 732 reads a mean value separation normalized output vector $\underline{y}_\tau$ 727 from the output code table memory 726 according to the index i 725. The amplitude regenerating circuit 733 multiplies the mean value separation normalized output vector 727 by the amplitude 721 and the mean value regenerating circuit adds the mean value 720 to the output of the amplitude regenerating circuit 733 and gives an output vector, namely, regenerated predictive error signal sequences $\hat{\underline{\varepsilon}}_f$ 709. That is,

$$\hat{\varepsilon}_f = \sigma \cdot y_{\tau j} + \mu \qquad (j = 1, 2, ..., k) \qquad (7)$$

Upon the reception of a signal indicating "no movement", the latch 731 gives zero for the mean value 720 and amplitude 721. In this case, the output vector is a zero vector. The operation of the decoder will be described in connection with Fig.9 . The reception buffer 734 receives the encoder output 716 and decodes the vector quantization coded output signal 707. The vector quantization decoder 708 decodes, as described above, the output vector, i.e., the predictive error signal sequences $\underline{\varepsilon}_f$ 709, and the adder 710 and the frame memory 712 regenerate the block $\hat{\underline{S}}_f$ 711 of regenerated picture signal sequences through operation based on the following formulas,

$$\begin{aligned} \hat{\underline{S}}_f &= \underline{P}_f + \hat{\underline{\varepsilon}}_f = \underline{S}_f + \underline{Q} \\ \underline{P}_f &= \hat{\underline{S}}_f \cdot Z^{-f} \end{aligned} \Bigg\} \qquad \ldots\ldots\ldots \quad (8)$$

where $\underline{Q}$ is vector quantization error and $Z^{-f}$ is a delay of one-frame cycle. The block/raster converter 736 scans in the raster scanning direction and converts the blocked regenerated picture signal sequences $\hat{\underline{S}}_f$ 711 to provide regenerated picture signal sequences 737.

The constitution as described hereinbefore of this basic inter-frame vector quantizer has problems such that the threshold $T_\theta$ becomes large to stabilize the amount of information, when the picture varies sharply and, consequently, the region changed from that of the preceding scene remains as in the preceding scene with some blocks, and thereby the boundary between blocks becomes conspicuous.

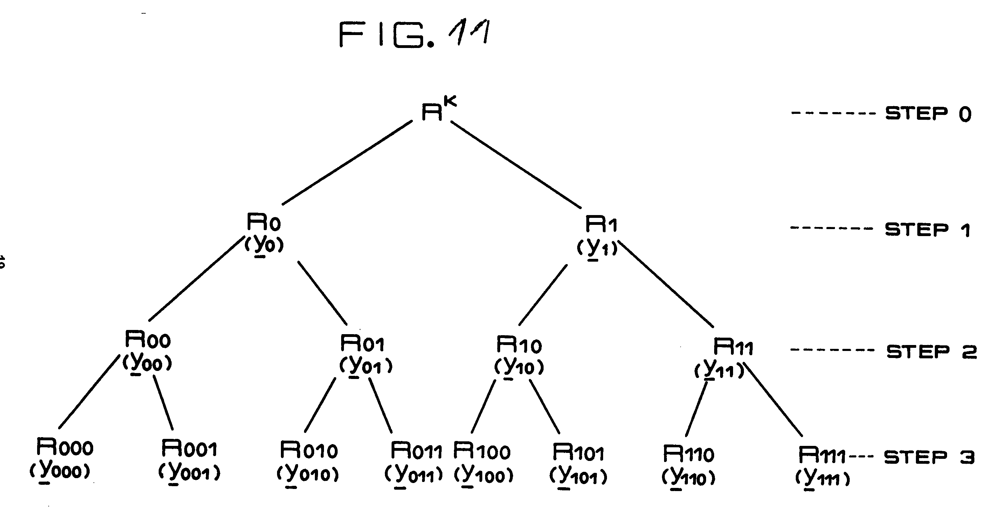

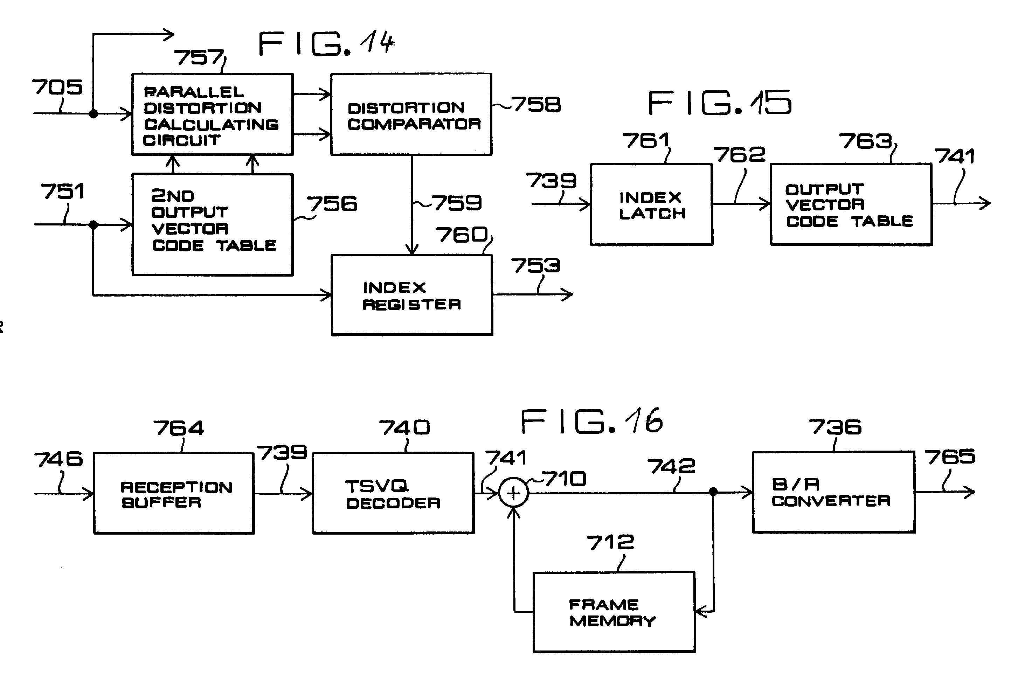

The embodiment of the present invention based on the basic principle will be described in connection with the accompanying drawings. Consider a binary tree as shown in Fig. 11. The root of the tree and each node correspond to k-dimensional signal space $R^k$ and to a space formed by partitioning $R^k$ in steps respectively. Each node has a representative point, which is the output vector of k dimensions. The output vectors of each step are produced on the basis of the distribution of input vectors so that the total sum of distortions between the input vectors and the output vectors is minimized. That is, the stepped partition of the space is made on the basis of the distribution of input vectors in $R^k$. When an input vector is given, an output vector corresponding to the last node is selected by comparing the distortions of two output vectors branched from a node from the input and selecting a branch leading to an output vector having a smaller distortion from the input vector, from the first step through the last step. When the last step is the $n^{th}$ step, the binary tree has $2^n$ nodes in the last step. In Fig. 11, n = 3. The description given above explains the principle of tree search vector quantization (TSVQ). Fig. 14 shows an exemplary constitution of an encoder according to the present invention. In Fig. 12, indicated at 701 are digitized picture signal sequences, at 702 is a raster/block scan converter, at 703 are blocked picture signals, at 704 is a subtractor, at 705 is a block of predictive error signals, at 738 is a TSVQ encoder based on the above-mentioned principle, at 739 is a TSVQ encoder output, at 740 is a TSVQ decoder, at 741 is a TSVQ decoder output, at 710 is an adder, at 742 is a block of regenerated picture signals, at 712 is a frame memory, at 743 is an output of the frame memory 712, i.e., a block of predictive signals, at 744 is a transmission buffer, at 745 is a feedback control signal and at 746 is an encoder output. Fig. 13 shows the details of an exemplary constitution of the TSVQ encoder 738. In Fig. 13, indicated at 747 is a limiter which measures the distance between an input vector and the origin and quantizes the input vector into a zero vector when the distance is smaller than a threshold, at 748 is a zero vector detection signal given when an input vector is quantized into a zero vector by the limiter 747, at 749 is a coding controller, at 750 is a first-stage TSVQ encoder, at 751 is an output vector index given at a stage where the search has been made as far as the first-stage TSVQ encoder, at 752 is a second-stage TSVQ encoder, at 753 is an output vector index given at a stage where search has been made as far as the second-stage TSVQ encoder 752, at 754 is a third-stage TSVQ encoder and at 755 is an output vector index given at a stage where the search has been made as far as the third-stage TSVQ encoder 754. Fig. 14 shows the further details of an exemplary constitution of the second-stage TSVQ encoder 752. In Fig. 14, indicated at 756 is a second-stage output vector code table memory, at 757 is a parallel distortion calculating circuit, at 758 is a distortion comparator, at 759 is a resultant signal of comparison given by the distortion comparator 758 and at 760 is an index register. Fig. 15 shows an exemplary constitution of the TSVQ decoder 740. In Fig.15 , indicated at 761 is an index latch, at 762 is an output vector index and at 763 is an output vector code table memory. Fig. 16 shows an exemplary constitution of a decoder according to the present invention. In Fig.16 , indicated at 764 is a reception buffer and at 765 are regenerated picture signal sequences.

First the operation of the encoder will be described hereunder.

Digitized picture signal sequences 701 are samples given sequentially along the direction of raster scanning. The raster/block scan converter 702 blocks every k picture signal sequences and scans and converts the blocks sequentially. Suppose the blocked picture signal sequences 703 in a frame No. f are expressed by a signal source vector $\underline{S}_f = \{S_1, S_2, ..., S_k\}_f$. When $\underline{\varepsilon}_f$ is the difference 705 between the signal source vector 703 and the block 743 of predictive signals, calculated by the subtracter 704, $\underline{\hat{\varepsilon}}_f$ is a TSVQ decoded output formed by the TSVQ encoder 738 and the TSVQ decoder 739, i.e., a block 741 of the regenerated predictive error signals, $\underline{\hat{S}}_f$ is a block of regenerated signals, and $\underline{P}_f$ is a block 743 of predictive signals obtained as a block of regenerated picture signals delayed by one-frame cycle by the frame memory 713. Then, the basic actions of the encoder shown in Fig.12 are expressed by:

$$\left.\begin{array}{rcl} \underline{\varepsilon}_f & = & \underline{S}_f - \underline{P}_f \\[1em] \underline{\hat{\varepsilon}}_f & = & \underline{\varepsilon}_f + \underline{Q} \\[1em] \underline{\hat{S}}_f & = & \underline{P}_f = \underline{\hat{\varepsilon}}_f = \underline{S}_f + \underline{Q} \\[1em] \underline{P}_f & = & \underline{S}_f \cdot z^{-t} \end{array}\right\} \qquad \dots\dots\dots \quad (9)$$

where $\underline{Q}$ is a vector quantization error and $z^{-t}$ is a delay of one-frame cycle caused by the frame memory 712. Basically, the encoder is constituted on the basis of the inter-frame DPCM system. The transmission buffer 744 receives a TSVQ coded output 739 and gives a coded output 746 to a transmission line. The transmission buffer 744 monitors the amount of transmitted information and controls the amount of coded data in the TSVQ encoder 738 according to the feedback control signal 745. The mode of this control, the TSVQ encoder and the TSVQ decoder will be described in connection with Figs. 13, 14 and 15. Suppose an output vector set Y of a binary tree structure as shown in Fig. 11 is obtained. Y is formed previously on the basis of the distribution of input vectors so that the total sum of the distortions of the vectors belonging to each step of the binary tree from the input vectors is minimized. Tree search vector quantization if the repetition of comparison for distortion between paired two output vectors and an input vector to decide paired two output vectors to be compared at the next step.

The three steps of the tree shown in Fig. 11 correspond to the first-stage TSVQ encoder 750, the second-stage TSVQ encoder 752 and the third-stage TSVQ encoder 754 of Fig. 13. The block $\underline{\varepsilon}_f$ 705 of predictive error signals is given as an input vector. The limiter 747 calculates the distortion of the input vector from the origin (zero vector) and regards the input vector 705 as a zero vector when the distortion is smaller than a predetermined threshold and gives a zero vector detection signal 748. This process is expressed by:

$$\text{when } d(\underline{\varepsilon}_f, \underline{0}) \leqq T_\theta, \; \underline{\varepsilon}_f \to 0 \quad (10)$$

where $T_\theta$ is a threshold, $\underline{\varepsilon}_f$ is an input vector and $d(\underline{\varepsilon}_f, \underline{0})$ is the distortion of the input vector from the zero vector. When the distortion is greater than the threshold $T_\theta$, the input vector 705 is sent to the first-stage TSVQ encoder 750. The distortion may be defined by various ways. Several ways of defining the distortion are shown below by way of example.

$$d(\underline{a}, \underline{b}) = \Sigma |a_j - b_j|^2$$

$$d(\underline{a}, \underline{b}) = \Sigma |a_j - b_j|$$

$$d(\underline{a}, \underline{b}) - \max_j |a_j - b_j| \qquad \right\} \qquad \dots\dots\dots \quad (11)$$

where $d(\underline{a}, \underline{b})$ is the distortion between a vector $\underline{a} = \{a_1, a_2, ..., a_k\}$ and a vector $\underline{b} = \{b_1, b_2, ..., b_k\}$. The input vectors which have not been regarded as a zero vector are processed through the first-, the second- and the third-stage TSVQ encoders for tree search vector quantization. At each stage, the distortion between the input vector and paired two output vectors assigned through the distortion comparison at the preceding stage is calculated to select one of the paired two vectors which has a smaller distortion from the input vector than the other. This information is added to the results of comparison given by the preceding stages and is sent to the next stage. At the first stage, since only one pair of output vectors is given, the result of comparison at the previous stages is neither necessary nor available. Suppose the result of distortion comparison at the first stage is $i_1$ 751. At the second stage, the distortion between the input vector and a pair of output vectors assigned on the basis of $i_1$ is calculated. The result of the calculation is added to $i_1$ to form $i_2$. The third stage receives the input vector $\varepsilon_f$ an $i_2$ and gives an index $i_3$. For example, as shown in Fig. 11, suppose "zero" is assigned when the left branch is selected and "1" is assigned when the right branch is selected. Then, $i_1$, $i_2$ and $i_3$ are expressed by one-digit, two-digit and three-digit binary numbers respectively corresponding to the indices of the output vectors. In the encoder of this invention, the number of stages of tree search vector quantization is controlled variably by the feedback control signal for variable-length coding. The coding controller 749 receives the feedback control signal 745, the zero vector detection signal 748, the index $i_1$ 751, the index $i_2$ 753 and the index $i_3$ 755 and, when the input vector is regarded as a zero vector, codes a code corresponding to zero vector. then the input vector is not regarded as a zero vector, the coding controller codes $i_1$, $i_2$ or $i_3$ on the basis of the feedback control signal 745 as an output vector index. When the transmission line, namely, the consecutive approximation of the input vector at each stage, has no reserve, the output of a stage closer to the first stage is coded and, when the transmission line has a reserve, the output of the last stage is coded. The amount of information of the input of a stage closer to the first stage is smaller, therefore, the amount of information to be coded is controlled in the manner as mentioned above.

Fig. 14 shows an exemplary constitution of the second-stage TSVQ encoder 752. Output vectors corresponding to the second step of the output vector set Y are stored in the second-stage output vector code table memory 756. The second-stage output vector code table memory 752 provides a pair of output vectors assigned by the index 751 of the preceding stage.

The parallel distortion calculating circuit 757 calculates the distortions of the pair of output vectors from the input vector 705 and the distortion comparator 758 compares the distortions and gives the result of comparison as a control signal 759. Several distortion calculating methods are available as described in connection with the limiter 747. The index register 760 adds the result of distortion comparison at the second stage to the index 751 given by the preceding stage and gives a second-stage index 753. The actions of the first stage and the third stage are almost the same as that of the second stage, except that the respective output vector code table memories of the first, second and third stages store output vector sets corresponding to the first, second and third stages respectively and that the first stage is not provided with the index of the preceding stage. All the output vectors belonging to the output vector set Y and zero vectors are stored in the output vector code table memory 763 of the TSVQ decoder 740. The index latch 761 decodes the code of the zero vector or the index of the output vector on the basis of the TSVQ coded output 739 and reads a TSVQ decoded output 741 from the output vector code table memory 763. The operation of the decoder of this invention will be described in connection with Fig. 16.

The reception buffer 764 receives the encoder output 746 and decodes the TSVQ coded output 739. The TSVQ decoder 740 decodes the output vectors as described earlier and the adder 710 and the frame memory 712 regenerate the block $\hat{\underline{S}}_f$ of regenerative picture signal suquences through operation given by:

$$\hat{\underline{S}}_f = \underline{P}_f + \hat{\underline{\varepsilon}}_f = \underline{S}_f + \underline{Q}$$

$$\underline{P}_f = \underline{S}_f \cdot Z^{-t} \qquad \dots\dots\dots \quad (12)$$

where $\underline{Q}$ is a vector quantization error, $Z^{-t}$ is a delay of one-frame cycle caused by the frame memory 712 and $\hat{\underline{\varepsilon}}_f$ is a block of regenerative predictive error signals obtained as output vectors. The block/raster scan converter 736 scans the block $\hat{\underline{S}}_f$ 742 along the direction of raster scanning and converts the same into a regenerated picture signal sequences 765. Although three-stage tree search vector quantization has been described by way of example, naturally, in practice, the number of stages is arbitrary and, generally, the number of stages is greater than three.

This embodiment is applicable to wide technical range relating to television transmission without being limited particularly to inter-frame coding and is also applicable to a sequential approximation quantizer capable of controlling the amount of data.

## Claims

1. A vector quantizer comprising:

a frame memory (712) capable of storing past picture signals of at least one frame;

a subtractor (704) which calculates the difference between a block of predictive signals (743) read from the frame memory (712) and an inputted block of picture signal sequences (703) formed by blocking every K ,K being a plural number, present picture signal sequences to provide a predictive error signal block;

an encoder (738) which receives the output signal (705) from said subtractor (704) and outputs an encoded signal (739);

a decoder (740) having an output vector code table (763) which stores output vectors formed in a binary tree of n steps ,n being a positive integer, by successive binary partition-operations on the input vectors;

an adder (710) which adds the regenerated predictive error signal block given as an output vector decoded by the decoder (740) and the predictive signal block to calculate regenerated picture signals to be used as past picture signals after being delayed by one-frame cycle or more by the frame memory (712); and

a transmission buffer (744) which gives a coded output (746) to a transmission line and outputs a feedback control signal (745) to the encoder (738) to control the amount of information to be encoded, whereby said encoder (738) comprises:

a limiter (747) which receives the predictive error signal block given by the subtractor (704) as an input vector and outputs a zero vector detection signal (748) if the distortion of the input vector from zero vector is smaller than a predetermined threshold and otherwise outputs the input vector (705);

a plurality of n-th stage tree search vector quantization (TSVQ) encoders (750,752,754), each of which receives the input vector (705) and an index (751 or 753) outputted from the respective preceding stage TSVQ encoder (750 or 751) and outputs the index (751. 753 or 755) of each stage; and

a coding controller (749) which receives the zero vector detection signal (748) from the limiter (747), the indices (751,753,755) from each TSVQ encoder (750,752 or 754) and the feedback control signal (745) from the transmission buffer (744), said controller controls adaptively said amount of information to be encoded on the basis of the feedback controlling signal (745) to output the index (751,753 or 755) or a zero vector,

wherein each one of said TSVQ encoders (750, 752 or 754) includes;

an output vector code table (756) having the same contents as that of the output vector code table (763) of said decoder (740) and providing a pair of output vectors assigned by the index of the respective preceding stage and corresponding to two nodes in said binary tree under a node assigned by the input vector (705) or the index (751 or 753) of the preceding stage;

a parallel distortion calculating circuit (757) which calculates distortions between the input vector (705) and the two output vectors outputted by the output vector code table (756); and

a distortion comparator (758) which compares the two distortions provided by the distortion calculating circuit (757) and outputs a result of the comparison (759) ; and

an index register (760) which adds the result of the comparison (759) to the index (751 or 753) of the preceding stage to provide the index (753 or 755) for the next stage TSVQ encoder (752 or 754) and the coding controller (749).

**Patentansprüche**

1. Eine Vektorquantisiervorrichtung, umfassend:
   einen Bildspeicher (712), zur Speicherung von vorausgegangenen Bildsignalen wenigstens eines Bildes;
   einen Subtrahierer (704), der die Differenz zwischen einem Teilbildbereich von aus dem Bildspeicher (712) ausgelesenen Prädiktionssignalen (743) und einem eingegebenen Teilbildbereich von durch Einteilung aller K gegenwärtigen Bildsignalfolgen in Teilbildbereiche gebildeten Bildsignalfolgen (703) berechnet, um einen Prädiktionsfehlersignalteilbildbereich bereitzustellen, wobei K eine Mehrzahl ist;
   einen Kodierer (738), der das Ausgangssignal (705) vom besagten Subtrahierer (704) empfängt und ein kodiertes Signal (739) ausgibt;
   einen Dekodierer (740) mit einer Ausgangsvektorkodetabelle (763), in der in einem binären Baum von n Schritten durch sukzessive binäre Teilungsoperationen an den Eingangsvektoren gebildete Ausgangsvektoren gespeichert werden, wobei n eine positive ganze Zahl ist;
   einen Addierer (710), der den als einen vom Dekodierer (740) dekodierten Ausgangsvektor abgegebenen regenerierten Prädiktionsfehlersignalteilbildbereich und den Prädiktionssignalteilbildbereich addiert, um regenerierte Bildsignale zu berechnen, die als vorausgegangene Bildsignale zu benutzen sind, nachdem sie vom Bildspeicher (712) um einen oder mehrere Ein-Bild-Zyklen verzögert worden sind; und
   einen Übertragungspuffer (744), der eine kodierte Ausgabe (746) an eine Übertragungsleitung abgibt und an den Kodierer (738) ein Rückkopplungssteuersignal (745) zur Steuerung der zu kodierenden Informationsmenge ausgibt, wobei der besagte Kodierer (738) gekennzeichnet ist durch:
   einen Begrenzer (747), der den vom Subtrahierer (704) abgegebenen Prädiktionsfehlersignalteilbildbereich als Eingangsvektor empfängt und ein Nullvektorerkennungssignal (748) ausgibt, wenn die Verschiebung des Eingangsvektors hinsichtlich des Nullvektors geringer als ein vorbestimmter Schwellwert ist, und ansonsten den Eingangsvektor (705) ausgibt;
   eine Mehrzahl von Baumsuch-Vektorquantisierungs-(TSVQ)-Kodierern (750, 752, 754) der n-ten Stufe, die jeweils den Eingangsvektor (705) und einen vom TSVQ-Kodierer (750 oder 751) der entsprechenden vorhergehenden Stufe ausgegebenen Index (751 oder 753) empfangen und den Index (751, 753 oder 755) jeder Stufe ausgeben; und
   eine Kodiersteuerung (749), die das Nullvektorerkennungssignal (748) vom Begrenzer (747), die Indizes (751, 753, 755) von jedem TSVQ-Kodierer (750, 752 oder 754) und das Rückkopplungssteuersignal (745) vom Übertragungspuffer (744) empfängt, wobei die besagte Steuerung die besagte zu kodierende Informationsmenge adaptiv auf der Basis des Rückkopplungssteuersignals (745) steuert, um den Index (751, 753 oder 755) oder einen Nullvektor auszugeben,
   wobei jeder der besagten TSVQ-Kodierer (750, 752 oder 754) folgendes umfaßt:
   eine Ausgangsvektorkodetabelle (756), die denselben Inhalt wie die Ausgangsvektorkodetabelle (763) des besagten Dekodierers (740) hat und ein Paar Ausgangsvektoren bereitstellt, die vom Index der entsprechenden vorhergehenden Stufe zugewiesen sind und
   zwei Knoten im besagten binären Baum unterhalb einem vom Eingangsvektor (705) oder vom Index (751 oder 753) der vorhergehenden Stufe zugewiesenen Knoten entsprechen;
   eine Parallelverschiebungsberechnungsschaltung (757), die Verschiebungen zwischen dem Eingangsvektor (705) und den zwei von der Ausgangsvektorkodetabelle (756) ausgegebenen Ausgangsvektoren berechnet; und
   einen Verschiebungsvergleicher (758), der die beiden von der Verschiebungsberechnungsschaltung (757) bereitgestellten Verschiebungen vergleicht und ein Ergebnis des Vergleichs (759) ausgibt; und
   ein Indexregister (760), das das Ergebnis des Vergleichs (759) zum Index (751 oder 753) der vorhergehenden Stufe hinzuaddiert, um den Index (753 oder 755) für den TSVQ-Kodierer (752 oder 754) der nächsten Stufe und die Kodiersteuerung (749) bereitzustellen.

**Revendications**

1. Quantificateur vectoriel comprenant:
   une mémoire d'images (712) capable d'emmagasiner des signaux vidéo antérieurs correspondant à au moins une image;
   un soustracteur (704) qui calcule la différence entre un bloc de signaux de prédiction (743) extrait de la mémoire d'images (712) et un bloc d'entrée de séquences de signaux vidéo (703) formé par la mise en bloc de chaque K, K étant un nombre pluriel, présentes séquences de signaux vidéo afin de fournir un bloc de signaux d'erreur de prédiction;

un codeur (738) qui reçoit le signal de sortie (705) en provenance dudit soustracteur (704) et qui délivre en sortie un signal codé (739);

un décodeur (740) qui comporte une table de codes de vecteurs de sortie (763) qui emmagasine des vecteurs de sortie constitués sous la forme d'un arbre binaire de n niveaux, n étant un nombre entier positif, par des opérations de distribution binaire successives faites sur les vecteurs d'entrée;

un additionneur (710) qui ajoute le bloc de signaux d'erreur de prédiction régénérés, fourni en tant que vecteur de sortie décodé par le décodeur (740), au bloc de signaux de prédiction pour calculer des signaux vidéo régénérés à utiliser en tant que signaux vidéo antérieurs après avoir été retardés d'un cycle d'une image ou plus par la mémoire d'images (712); et

un tampon de transmission (744) qui fournit une sortie codée (746) à une ligne de transmission et envoie, en tant que sortie, un signal de rétrocontrôle (745) au codeur (738) pour commander la quantité d'informations à coder,

ledit codeur (738) comprenant:

un limiteur (747) qui reçoit le bloc de signaux d'erreur de prédiction fourni par le soustracteur (704) en tant que vecteur d'entrée et fournit en sortie un signal de détection de vecteur nul (748) si la distorsion du vecteur d'entrée par rapport au vecteur nul est inférieure à un seul prédéterminé et qui, sinon, délivre en sortie le vecteur d'entrée (705);

une multiplicité de codeurs de quantification vectorielle par recherche arborescente (TSVQ) de $n^{ème}$ niveau (750, 752, 754), qui reçoivent chacun le vecteur d'entrée (705) et un index (751 ou 753) délivré en sortie par le codeur TSVQ de l'étage précédent respectif (750 ou 751) et délivrent en sortie l'index (751, 753 ou 755) de chaque étage; et

un contrôleur de codage (749) qui reçoit le signal de détection de vecteur nul (748) en provenance du limiteur (747), les index (751, 753, 755) en provenance de chaque codeur TSVQ (750, 752 ou 754) et le signal de rétrocontrôle (745) en provenance du tampon de transmission (744), ledit contrôleur commandant de façon adaptative ladite quantité d'informations à coder sur la base du signal de rétrocontrôle (745) pour délivrer en sortie l'index (751, 753 ou 755) ou un vecteur nul,

dans lequel chacun desdits codeurs TSVQ (750, 752 ou 754) comprend:

une table de codes de vecteurs de sortie (756) dont le contenu est le même que celui de la table de codes de vecteurs de sortie (763) dudit décodeur (740) et qui fournit une paire de vecteurs de sortie affectés par l'index de l'étage précédent respectif et correspondant à deux noeuds dudit arbre binaire sous un noeud affecté par le vecteur d'entrée (705) ou l'index (751 ou 753) de l'étage précédent;

un circuit de calcul de distorsion parallèle (757) qui calcule les distorsions entre le vecteur d'entrée (705) et les deux vecteurs de sortie délivrés en sortie par la table de codes de vecteurs de sortie (756); et

un comparateur de distorsions (758) qui compare les deux distorsions fournies par le circuit de calcul de distorsion (757) et délivre en sortie un résultat de la comparaison (759); et

un registre d'index (760) qui ajoute le résultat de la comparaison (759) à l'index (751 ou 753) de l'étage précédent pour fournir l'index (753 ou 755) pour le codeur TSVQ de l'étage suivant (752 ou 754) et le contrôleur de codage (749).

# FIG.1

# FIG.2

FIG. 3 (PRIOR ART)

EP 0 446 968 B1

# FIG. 4

OUTPUT

0 → INPUT

# FIG. 5
(PRIOR ART)

10

103 →

ANALOGY DEGREE COMPUTATION CIRCUIT

11

104 →

MOVEMENT REGION LINE MEMORY

13

ANALOGY DEGREE COMPARATOR

12

LINE MEMORY CONTROL CIRCUIT

112~

14

111

MOVEMENT VECTOR LATCH

→ 105

## FIG. 6

701 → **R/B CONVERTER** (702) → 703 → (−) 704 → **VECTOR QUANTIZATION ENCODER** (706) → 707 → **VECTOR QUANTIZATION DECODER** (708) → **TRANSMISSION BUFFER** (714) → 716

705

715

709 (+) 710

**FRAME MEMORY** (712)

711

## FIG.7

705 → **MEAN VALUE SEPARATING CIRCUIT** (717) → **AMPLITUDE NORMALIZING CIRCUIT** (718) → 719 → **DISTORTION CALCULATING CIRCUIT** (728) → **MINIMUM DISTORTION DETECTING CIRCUIT** (729) → 730

715

**MOVEMENT DETECTION CIRCUIT** (722)

726 727 725

**OUTPUT VECTOR CODE TABLE** (726)

**CODE TABLE ADDRESS COUNTER** (724)

725

**TRANS-MIS-SION LATCH** (731) → 707

720 723 721

EP 0 446 968 B1

# FIG. 8

707 → **RECEPTION LATCH** (732) → 725 → **OUTPUT VECTOR CODE TABLE** (726) → 727 → **AMPLITUDE REGENERATING CIRCUIT** (733) → **MEAN VALUE REGENERATING CIRCUIT** (734) → 709

721

720

# FIG. 9

716 → **RECEPTION BUFFER** (735) → 707 → **VECTOR QUANTIZATION DECODER** (708) → 709 → (+) 710 → 711 → **B/R CONVERTER** (736) → 737

712 **FRAME MEMORY**

713

TIME

# FIG. 10

FRAME No. f-1

$\underline{S}$f-1

FRAME No. f

$\underline{S}$f

S1  S2

S3  S4

EP 0 446 968 B1

# FIG. 11

$R^K$ ------- STEP 0

$R_0$ ($\underline{y}_0$)      $R_1$ ($\underline{y}_1$) ------- STEP 1

$R_{00}$ ($\underline{y}_{00}$)   $R_{01}$ ($\underline{y}_{01}$)   $R_{10}$ ($\underline{y}_{10}$)   $R_{11}$ ($\underline{y}_{11}$) ------- STEP 2

$R_{000}$ ($\underline{y}_{000}$)   $R_{001}$ ($\underline{y}_{001}$)   $R_{010}$ ($\underline{y}_{010}$)   $R_{011}$ ($\underline{y}_{011}$)   $R_{100}$ ($\underline{y}_{100}$)   $R_{101}$ ($\underline{y}_{101}$)   $R_{110}$ ($\underline{y}_{110}$)   $R_{111}$ ($\underline{y}_{111}$) --- STEP 3

EP 0 446 968 B1

# FIG. 12

# FIG. 13

EP 0 446 968 B1

## FIG.14

## FIG.15

## FIG.16

EP 0 446 968 B1